# EUROPÄISCHE PATENTSCHRIFT

(11) **EP 4 266 652 B1**
(45) Veröffentlichungstag und Bekanntmachung des Hinweises auf die Patenterteilung: **03.09.2025**
(21) Anmeldenummer: 22169043.1
(22) Anmeldetag: 20.04.2022
(51) Int. Cl.: H04L 67/565, G06F 40/40, A47L 13/51, A47L 11/40

(54) **KOMMUNIKATIONSSYSTEM UND KOMMUNIKATIONSVERFAHREN FÜR REINIGUNGSAUFGABEN**
COMMUNICATION SYSTEM AND COMMUNICATION METHOD FOR CLEANING TASKS
SYSTÈME DE COMMUNICATION ET PROCÉDÉ DE COMMUNICATION POUR TÂCHES DE NETTOYAGE

(43) Veröffentlichungstag der Anmeldung: 25.10.2023
(73) Patentinhaber: Carl Freudenberg KG, 69469 Weinheim (DE)
(72) Erfinder: Auer, Robert, 86391 Stadtbergen (DE)
(74) Vertreter: Hoffmann Eitle

(56) Entgegenhaltungen:
- DE-A1- 102017 010 461
- US-A1- 2016 253 317

## Beschreibung

### Gebiet der Erfindung

Die Erfindung betrifft ein Kommunikationssystem für Reinigungsaufgaben mit einer Vielzahl an Reinigungswägen mit jeweils einer ersten Kommunikationseinrichtung sowie einer zweiten Kommunikationseinrichtung. Des Weiteren betrifft die Erfindung ein derartiges Kommunikationsverfahren.

### Hintergrund der Erfindung

Bei der Reinigung von zu reinigenden Objekten werden häufig eine Vielzahl von Reinigungskräften eingesetzt, die jeweils die für die Reinigungsaufgaben benötigten Gerätschaften mit einem Reinigungswagen mitführen. Eine Vielzahl von Reinigungskräften muss dabei zur Abgrenzung der Reinigungsaufgaben zwischen verschiedenen Reinigungskräften, aber auch für den Empfang von Instruktionen in direktem Dialog mit einem Objektleiter stehen. Bislang erfolgt diese Kommunikation zwischen einem Objektleiter und verschiedenen Reinigungskräften entweder in direktem Dialog oder aber per Telefon. Aufgrund der Vielfalt der bei Personal in der Reinigungsbranche verbreiteten Muttersprachen ist eine derartige Kommunikation aber schwierig und vor allem auch fehleranfällig.

Zur Lösung des Problems verwenden im Stand der Technik bekannte Systeme sprachneutrale Piktogramme, über welche die Reinigungskräfte über die täglich zu erledigenden Arbeiten informiert werden.

Die Verwendung von Piktogrammen stößt allerdings an ihre Grenzen, wenn spezielle Rückfragen einer Reinigungskraft an den Objektleiter bestehen oder aber spezielle oder außerplanmäßige Aufgaben übernommen werden sollen, für die komplexere und detailliertere Informationen übermittelt werden müssen.

Aus der US 2016/253317 A1 ist ein Server bekannt, über den von dem Smartphone eines Benutzers zum Smartphone eines anderen Benutzers Text und Sprachnachrichten übersandt werden können, die dabei übersetzt werden.

Die DE 10 2017 010461 A1 beschreibt ein Kommunikationssystem für Reinigungsaufgaben mit den Merkmalen des Oberbegriffs des Anspruchs 1.

### Darstellung der Erfindung

Der Erfindung liegt die Aufgabe zugrunde, ein Kommunikationssystem sowie ein Kommunikationsverfahren vorzuschlagen, die die Kommunikation zwischen Objektleiter und Reinigungskräften vereinfachen und weniger fehleranfällig machen.

Diese Aufgabe wird durch ein Kommunikationssystem für Reinigungsaufgaben mit den Merkmalen des Anspruchs 1 sowie ein Verfahren zum Austausch von Informationen mit den Merkmalen des Anspruchs 9 gelöst. Bevorzugte Ausführungsformen folgen aus den übrigen Ansprüchen.

Das erfindungsgemäße Kommunikationssystem für Reinigungsaufgaben umfasst eine Vielzahl von Reinigungswägen mit jeweils einer ersten Kommunikationseinrichtung, die einen ersten Sender und einen ersten Empfänger umfasst, eine zweite Kommunikationseinrichtung, die einen zweiten Sender und einen zweiten Empfänger umfasst, und einen zentralen Kommunikationsserver. Der zentrale Kommunikationsserver ist ausgestaltet, um mehrere Aufgaben zu erfüllen. Über den zentralen Kommunikationsserver sind kabellos von der ersten Kommunikationseinrichtung oder der zweiten Kommunikationseinrichtung Informationspakete empfangbar, die Textnachrichten sowie den oder die gewünschten Empfänger aus der Gruppe bestehend aus den ersten Empfängern und dem zweiten Empfänger umfassen. Darüber hinaus ist der zentrale Kommunikationsserver dahingehend ausgestaltet, dass er Zugriff auf eine Sprachübersetzungssoftware besitzt. Weiterhin ist der zentrale Kommunikationsserver dahingehend ausgestaltet, dass er Zugriff auf eine Zuordnungsliste besitzt, die vorzugsweise auf dem zentralen Kommunikationsserver hinterlegt ist und die der zweiten Kommunikationseinrichtung sowie der Vielzahl an ersten Kommunikationseinrichtungen jeweils eine Sprache aus einer vorgegebenen Auswahl an Sprachen zuordnet. Der Kommunikationsserver ist schließlich dahingehend ausgestaltet, dass von dem zweiten Sender oder einem der Vielzahl an ersten Sendern empfangene Nachrichten selbsttätig in die hinterlegte Sprache des gewünschten Empfängers oder jedes gewünschten Empfängers übersetzbar sind und an den gewünschten Empfänger oder jeden gewünschten Empfänger übertragbar sind.

Um das Kommunikationssystem anhand eines Beispiels zu präzisieren, könnte der Objektleiter die zweite Kommunikationseinrichtung verwenden, die einen zweiten Sender und einen zweiten Empfänger umfasst, während den in einem zu reinigenden Objekt tätigen Reinigungskräfte jeweils ein Reinigungswagen aus der Vielzahl an Reinigungswägen zugeordnet ist, wobei jeder Reinigungswagen mit jeweils einer ersten Kommunikationseinrichtung versehen ist, die einen ersten Sender und ersten Empfänger umfasst. Sowohl die ersten Kommunikationseinrichtungen wie auch die zweite Kommunikationseinrichtung kommunizieren kabellos mit einem zentralen Kommunikationsserver, der vorzugsweise cloudbasiert ist. Im Kommunikationsserver ist eine Zuordnungsliste hinterlegt, die der zweiten Kommunikationseinrichtung in Form des Objektleiters sowie der Vielzahl an ersten Kommunikationseinrichtungen in Form der individuellen Reinigungskräfte jeweils eine Sprache zuordnet. Dabei handelt es sich vorzugsweise um die Muttersprache der jeweiligen Personen oder zumindest um eine Auswahl an Sprachen, die es allen beteiligten Personen, d.h. sowohl dem Objektleiter wie auch den individuellen Reinigungskräften ermöglicht, miteinander zu kommunizieren. Im Wege der Kommunikation zwischen der zweiten Kommunikationseinrichtung und den ersten Kommunikationseinrichtungen wird von einem ersten Sender oder einem zweiten Sender ein Informationspaket an den zentralen Kommunikationsserver übersandt. Ein derartiges Informationspaket umfasst Textnachrichten sowie den oder die gewünschten Empfänger aus der Gruppe bestehend aus den ersten Empfängern und dem zweiten Empfänger. Der zentrale Kommunikationsserver besitzt Zugriff auf eine Sprachübersetzungssoftware und übersetzt basierend auf der Zuordnungsliste, in der allen an der Kommunikation beteiligten ersten und zweiten Empfängern eine Sprache zugeordnet ist, die empfangene Nachricht in die in der Zuordnungsliste hinterlegte Sprache oder hinterlegten Sprachen und übermittelt diese an den gewünschten Empfänger oder jeden gewünschten Empfänger. Wenn eine Nachricht z.B. von der zweiten Kommunikationseinrichtung an mehrere erste Kommunikationseinrichtungen übersandt wird, kann dabei diese Nachricht individuell von jeder ersten Kommunikationseinrichtung, die der erste Empfänger dieser Nachricht darstellt, in der jeweils hinterlegten Sprache empfangen werden.

Auf diese Weise ist eine Kommunikation in beiden Richtungen zwischen einem Objektleiter und individuellen Reinigungskräften möglich, die weniger fehleranfällig ist und außer in Bezug auf Ungenauigkeiten bei der maschinengestützten Übersetzung der Nachrichten auch komplexe Informationen so überträgt, dass der jeweilige Empfänger diese versteht. Auf diese Weise werden Sprachbarrieren zwischen einer Vielzahl von Personen mit unterschiedlichen Muttersprachen weitestgehend reduziert, was Fehler beim Informationsaustausch erheblich reduziert.

Das erfindungsgemäße Verfahren zum Austausch von Informationen zwischen einer Vielzahl an Reinigungswägen mit jeweils einer ersten Kommunikationseinrichtung mit einem ersten Sender und ersten Empfänger, und einer zweiten Kommunikationseinrichtung mit einem zweiten Sender und zweiten Empfänger umfasst die Schritte:
- kabelloses Übertragen eines Informationspakets an einen zentralen Kommunikationsserver, wobei das Informationspaket eine beliebige, von einem Benutzer in eine der ersten Kommunikationseinrichtungen oder die zweite Kommunikationseinrichtung eingegebene elektronische Nachricht in einer ersten Sprache, den oder die gewünschten Empfänger sowie automatisch generierte Informationen über den Benutzer umfasst;
- Zugriff des zentralen Kommunikationsservers auf eine Sprachübersetzungssoftware, um die Nachricht in eine oder mehrere zweite Sprachen zu transferieren, die der in einer Zuordnungsdatei hinterlegten Sprache des gewünschten Empfängers, oder den jeweiligen in der Zuordnungsdatei hinterlegten Sprachen der gewünschten Empfänger entspricht; und
- kabelloses Übersenden durch den zentralen Kommunikationsserver der in die zweite Sprache übersetzten Nachricht an den oder die gewünschten Empfänger.

Bei der elektronischen Nachricht kann es sich um eine Textnachricht in der ersten Sprache handeln, die in eine Textnachricht in der zweiten Sprache übersetzt wird. In gleicher Weise ist es aber möglich, die elektronische Nachricht als Sprachdatei zu empfangen und als Sprachdatei in der zweiten Sprache auszugeben oder aber auch als Textdatei in der zweiten Sprache auszugeben. In gleicher Weise kann eine im zentralen Kommunikationsserver empfangene elektronische Nachricht eine Textnachricht sein, die in der ersten Sprache empfangen wird und entweder als Textnachricht oder Sprachnachricht in die zweite Sprache transferiert wird und kabellos an den oder die gewünschten Empfänger übertragen wird.

Die Möglichkeit, mit bestimmten Empfängern auch über Sprachnachrichten zu kommunizieren, besitzt den Vorteil, dass auch eine Kommunikation mit Personen möglich ist, für die das Lesen und/oder Verfassen von Textnachrichten herausfordernd ist.

Nach einer bevorzugten Ausführungsform umfasst die ersten Kommunikationseinrichtung einen Monitor am Reinigungswagen, der vorzugsweise als Touchpad ausgestaltet ist.

Über den Monitor am Reinigungswagen können Nachrichten empfangen werden und beispielsweise eine Liste an zu erledigenden Tätigkeiten angezeigt werden. Indem der Monitor vorzugsweise als Touchpad ausgestaltet ist, kann auf eine einfache Weise, beispielsweise mit Hilfe eines Touchpens, der sich betätigen lässt ohne bei der Reinigung zu tragende Handschuhe abzustreifen, der Erhalt von Weisungen über das Anklicken einer geeigneten Schaltfläche bestätigt werden oder beispielsweise auch auf Wunsch eine Sprachausgabe der Nachricht aktiviert werden. Die Kommunikation mit Hilfe eines Monitors kann ebenso dazu verwendet werden, dass nach dem Erhalt einer Liste an zu erbringenden Tätigkeiten diese am Monitor durch Berühren von Bestätigungsfeldern, die den einzelnen Aufgaben zugeordnet sind, abgeklickt werden, um die Erledigung der zu erbringenden Tätigkeiten anzuzeigen.

Nach einer bevorzugten Ausführungsform der Erfindung umfasst die erste Kommunikationseinrichtung ein mobiles elektronisches Kommunikationsgerät, das ausgestaltet ist, um bei Annäherung an den zugehörigen Reinigungswagen über Nahfeldkommunikation kabellos Informationen mit diesem auszutauschen.

Das mobile elektronische Kommunikationsgerät kann dabei entweder das Mobilfunkgerät der Reinigungskraft oder aber auch ein spezielles Handgerät sein, das als Personal Digital Assistant (PDA) spritzwassergeschützt sein kann und von jeder Reinigungskraft mitgeführt wird. Dabei ist zu berücksichtigen, dass Reinigungskräfte den Reinigungswagen nicht in jeden Raum mitnehmen und beispielsweise in Waschräumen arbeiten, während der Reinigungswagen vor dem Waschraum auf dem Flur stehen bleibt. Sofern der Abstand ausreichend ist, um über eine Nahfeldkommunikation, wie beispielsweise Bluetooth, Daten zwischen der ersten Kommunikationseinrichtung und dem mobilen elektronischen Kommunikationsgerät auszutauschen, kann in diesem Fall eine Reinigungskraft auch während der Tätigkeit in einem angrenzenden Bereich in unmittelbarer Nähe Nachrichten empfangen oder versenden. Sollte die Reinigungskraft das elektronische Kommunikationsgerät über eine Distanz von der ersten Kommunikationseinrichtung und damit von dem Reinigungswagen entfernen, über die keine Nahfeldkommunikation mehr möglich ist, findet ein erneuter Datenaustausch und Datenabgleich automatisch bei einer erneuten Annäherung des mobilen elektronischen Kommunikationsgeräts an den zugehörigen Reinigungswagen statt, sobald das elektronische Kommunikationsgerät in dem Bereich der Nahfeldkommunikation mit der ersten Kommunikationseinrichtung eingetreten ist.

Nach einer bevorzugten Ausführungsform weist das mobile elektronische Kommunikationsgerät einen integrierten Lautsprecher oder ein Interface zu einem externen Lautsprecher, sowie ein Mikrofon oder ein weiteres Interface zu einem externen Mikrofon auf. Auf diese Weise kann eine Reinigungskraft, ohne die Reinigungstätigkeit zu unterbrechen Sprachnachrichten empfangen und als erster Sender Sprachnachrichten absetzen, was in hygienisch sensiblen Bereichen vorteilhaft ist, da keine Berührung mit der ersten Kommunikationseinrichtung oder dem elektronischen Kommunikationsgerät erforderlich ist. Wenn das elektronische Kommunikationsgerät bereits den Lautsprecher und das Mikrofon integriert haben, ist kein externes, weiteres Gerät wie ein In-Ear Kopfhörer erforderlich und die Kommunikation kann über die Sprachausgabe und Spracheingabe direkt mit dem elektronischen Kommunikationsgerät erfolgen, das dazu bevorzugt mit einer Sprachsteuerungssoftware zur berührungslosen Bedienung versehen ist.

Vorzugsweise ist der zentrale Kommunikationsserver weiterhin ausgestaltet, um Zugriff zu besitzen auf eine Spracherkennungssoftware, welche geeignet ist, Sprachnachrichten in einer Sprache aus der vorgegebenen Auswahl an Sprachen in Textnachrichten in dieser Sprache zu umzuwandeln.

Weiterhin bevorzugt ist es, dass der zentrale Kommunikationsserver ausgestaltet ist, um im Datenaustausch zu stehen mit einer Spracherzeugungssoftware, die geeignet ist, um Textnachrichten, die einer Sprache aus der vorgegebenen Auswahl an Sprachen abgefasst ist, in Sprachnachrichten in einer anderen Sprache aus der vorgegebenen Auswahl an Sprachen umzuwandeln.

Die beliebige Umwandlung zwischen Text- und Sprachnachrichten zwischen einer ersten Sprache und einer zweiten Sprache aus einer vorgegebenen Auswahl an Sprachen macht es erforderlich, dass es bei einer größeren Anzahl innerhalb der vorgegebenen Auswahl an Sprachen sehr viele Sprachkombinationen gibt, die über die Sprachübersetzungssoftware abzudecken sind. Daher ist es sinnvoll, den zentralen Kommunikationsserver cloudbasiert auszuführen, da dieser leicht auf fortgeschrittene Sprachübersetzungssoftware zugreifen kann, die von Cloudanbietern zur Verfügung gestellt werden.

Vorzugsweise weist jede erste Kommunikationseinrichtung eine Reset-Einrichtung auf, um die erste Kommunikationseinrichtung in einen vordefinierten Ausgangszustand zurückzusetzen.

Das Vorsehen einer Reset-Einrichtung ist vorteilhaft, da beispielsweise im Krankheitsvertretungsfall oder Urlaubsvertretungsfall die an der ersten Kommunikationseinrichtung eines Reinigungswagens voreingestellten Ein- und Ausgabemodalitäten in Form der Sprachauswahl, aber auch einer möglichen Auswahl, ob Sprach- oder Texteingabe und Sprach- oder Textausgabe gewünscht sind, auf eine Standardeinstellung zurückgesetzt werden können. Darüber hinaus ist es für eine beispielsweise spanisch sprechende Reinigungskraft, die im deutschen Sprachraum arbeitet leichter, das in deutscher Sprache angezeigte System auf Spanisch hin zu konfigurieren, als dies bei einer Anzeige auf Polnisch wäre, was möglicherweise der Sprachauswahl der vorangehenden Reinigungskraft entsprach, die mit dem zugehörigen Reinigungswagen zuletzt gearbeitet hat.

Nach einer weiteren bevorzugten Ausführungsform kann an einer ersten Kommunikationseinrichtung als Empfänger einer Nachricht zusätzlich zu einer Text- oder Sprachnachricht eines oder mehrere Piktogramme ausgegeben werden. Immer wenn beispielsweise zusätzliche Reinigungsaufgaben zu erledigen sind und sich diese auf einfache Weise in Form von einem oder mehreren Piktogrammen darstellen lassen, kann auf diese Weise die übersendete Text- oder Sprachnachricht auf einfache Weise ergänzt werden.

Piktogramme können zudem in der ersten Kommunikationseinrichtung mit Lehrvideos hinterlegt sein, die eine Anleitung dahingehend geben, wie beispielsweise ein spezieller Seifenspender geöffnet oder ein Lüftungsgitter entnommen wird, wenn hier spezielle Reinigungsaufgaben anstehen deren Abläufe verbal zu erklären zu aufwändig wäre.

### Kurze Beschreibung der Figur

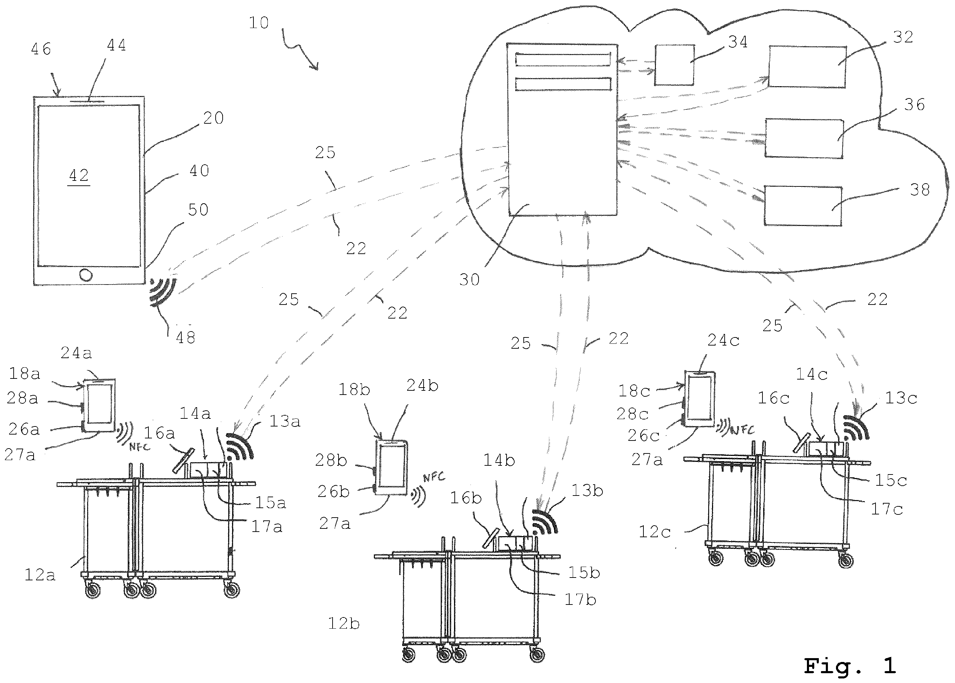

Nachfolgend wird die Erfindung anhand der Fig. 1 beschrieben, die schematisch das Kommunikationssystem nach der Erfindung darstellt.

### Wege zur Ausführung der Erfindung

In der Fig. 1 ist ein Kommunikationssystem 10 dargestellt. Das Kommunikationssystem 10 umfasst eine Mehrzahl an Reinigungswägen 12a, 12b, 12c, die jeweils von einer Reinigungskraft bei der Objektreinigung mitgeführt werden. Die Reinigungswägen 12a, 12b, 12c sind jeweils mit einer ersten Kommunikationseinrichtung 14a, 14b, 14c versehen, die ortsfest an den jeweiligen Reinigungswägen vorgesehen ist und jeweils mit einem ersten Sender 13a, 13b, 13c sowie einem ersten Empfänger 17a, 17b, 17c ausgestattet sind. Desweiteren ist jeder Reinigungswagen 12a, 12b, 12c mit einem Monitor 16a, 16b, 16c versehen. Weiterhin umfasst das erfindungsgemäße Kommunikationssystem eine zweite Kommunikationseinrichtung 20.

Jede erste Kommunikationseinrichtung 14a, 14b, 14c besitzt zudem einen flüchtigen oder permanenten Datenspeicher.

Ein erster Sender 13a, 13b, 13c ist ausgestaltet und geeignet, um Informationspakete 22 von der ersten Kommunikationseinrichtung 14a, 14b, 14c an einen zentralen Kommunikationsserver 30 zu übersenden. Der zentrale Kommunikationsserver 30 kann objektbasiert in einem zu reinigenden Objekt installiert sein, vorzugsweise handelt es sich bei dem zentralen Kommunikationsserver 30 allerdings um einen cloudbasierten Server, und die Kommunikation zwischen den ersten Kommunikationseinrichtungen 14a, 14b, 14c und dem zentralen Kommunikationsserver 30 erfolgt über eine in einem zu reinigenden Objekt vorhandene WLAN-Verbindung.

Die Informationspakete 22 umfassen eine beliebige elektronische Nachricht in einer ersten Sprache, Informationen in Bezug auf den oder die gewünschten Empfänger, sowie eine von jedem ersten Sender 13a, 13b, 13c automatisch generierte Information über den Sender, die auf in dem elektronischen Speicher der zugehörigen ersten Kommunikationseinrichtung 14a, 14b, 14c hinterlegte Informationen in Bezug auf die Konfiguration auf einen Benutzer bezogen ist, der mit dem zugehörigen Reinigungswagen 12a, 12b, 12c arbeitet und als erster Sender eine Nachricht übersendet. Informationen über den ersten Sender sind dabei insbesondere eine Identifikation der ersten Sprache, in welcher die von dem ersten Sender ausgesandte Nachricht abgefasst ist.

Der zentrale Kommunikationsserver 30 empfängt das Informationspaket 22 und greift auf eine Zuordnungsdatei 34 zu, in der die zweite Sprache des gewünschten Empfängers oder aber die unterschiedlichen zweiten Sprachen im Falle von mehreren gewünschten Empfängern hinterlegt sind.

Auf der Grundlage dieser Information übersendet der zentrale Kommunikationsserver 30 die in dem empfangenen Informationspaket 22 enthaltene Nachricht im Falle einer empfangenen Textnachricht an eine Sprachübersetzungssoftware 32, mit Hilfe derer die Textnachricht in der ersten Sprache des ersten Senders in eine oder mehrere zweite Sprachen übersetzt wird, welche der in der Zuordnungsdatei 34 hinterlegten Sprache des gewünschten Empfängers oder aber den in der Zuordnungsdatei 34 hinterlegten Sprachen der gewünschten Empfänger entspricht.

Handelt es sich bei der Nachricht um eine Sprachnachricht, übersendet der zentrale Kommunikationsserver 30 die entsprechende Sprachdatei an eine Spracherkennungssoftware 36, die dazu geeignet ist, um Sprachnachrichten in der ersten Sprache in eine Textdatei mit einer Textnachricht in der ersten Sprache umzuwandeln. Die von der Spracherkennungssoftware 36 enthaltene Textnachricht in der ersten Sprache wird daraufhin vom zentralen Kommunikationsserver 30 an die Sprachübersetzungssoftware 32 übermittelt, um die Textnachricht in die zweite Sprache zu übertragen.

Ergänzend ist es auch möglich, die in eine zweite Sprache übersetzte Textnachricht anschließend wieder in eine Sprachnachricht in der zweiten Sprache umzuwandeln, wozu eine Kommunikation und ein Datenaustausch zwischen dem zentralen Kommunikationsserver 30 und einer Spracherzeugungssoftware 38 dient.

Die nach Abschluss der Übersetzung und alternativ Umwandlung zwischen Sprach- und Textnachrichten vorliegende Datei wird in Form eines zweiten Informationspakets 25 an den oder die Empfänger übersandt. Dieses Informationspaket 25 umfasst die Sprach- oder Textnachricht sowie Angaben zum Sender des zweiten Informationspakets.

Die zweite Kommunikationseinrichtung 20 des erfindungsgemäßen Kommunikationssystems ist vorzugsweise ein Tabletcomputer 40 mit einem Display 42, einem Mikrofon 44 und einem Lautsprecher 46. Konkret wird die zweite Kommunikationseinrichtung 20 für Reinigungsaufgaben einem Objektleiter zugeordnet, der oder die in einer ebenfalls voreingestellten ersten Sprache mittels des zweiten Senders 48 ebenfalls Informationspakte 22 an den zentralen Kommunikationsserver 30 übersenden kann, wobei die im Informationspaket 22 enthaltenen Sprach- oder Textnachrichten in gleicher Weise wie oben beschrieben in die jeweilige zweite Sprache des oder der ersten Empfänger übertragen und an diese übersandt wird. Eine geeignete Kommunikation zwischen der zweiten Kommunikationseinrichtung 20 und einer oder mehreren der ersten Kommunikationseinrichtungen 14a, 14b, 14c bedingt in gleicher Weise aber auch, dass die zweite Kommunikationseinrichtung 20 auch mit einem zweiten Empfänger 50 ausgestattet ist, um Rückmeldungen oder Fragen von den Reinigungskräften empfangen zu können, die jeweils mit den Reinigungswägen 12a, 12b, 12c mit den ersten Kommunikationseinrichtung 14a, 14b, 14c in einem zu reinigenden Objekt tätig sind.

Die erste Kommunikationseinrichtung 14a, 14b, 14c umfasst jeweils ein mobiles elektronisches Kommunikationsgerät 18a, 18b, 18c, das über Nahfeldkommunikation (NFC), beispielsweise Bluetooth, mit der zugehörigen ersten Kommunikationseinrichtung 14a, 14b, 14c kommuniziert und in Form eines Personal Digital Assistant (PDA) vorgesehen sein kann, das von jeder Reinigungskraft stets am Körper mitgeführt werden kann. Die mobilen elektronischen Kommunikationsgeräte 18a, 18b, 18c tauschen im Nahfeldkommunikationsbereich mit dem zugehörigen Reinigungswagen 12a, 12b, 12c selbsttätig Informationen aus und führen einen Datenabgleich aus. Auf diese Weise können die von der ersten Kommunikationseinrichtung 14a, 14b, 14c empfangenen Informationen automatisch an die mobilen elektronischen Kommunikationsgeräte 18a, 18b, 18c weitergeleitet werden.

Die mobilen elektronischen Kommunikationsgeräte weisen dazu ein Display auf, vorzugsweise auch einen integrierten Lautsprecher 24a, 24b, 24c oder aber ein Interface zu einem externen Lautsprecher sowie ein Mikrofon 27a, 27b, 27c oder ein weiteres Interface 28a, 28b, 28c zu einem externen Gerät mit Mikrofon. Das externe Gerät mit Lautsprecher und Mikrofon kann dabei ein In-Ear Kopfhörer sein, der den Vorteil besitzt, dass das mobile elektronische Kommunikationsgerät zumindest spritzwassergeschützt, aber sogar auch wasserdicht sein kann, was bei dem Vorsehen eines Mikrofons und Lautsprecher technisch aufwändig ist.

Die in einem zu reinigenden Objekt tätigen Reinigungskräfte können somit über die den ersten Kommunikationseinrichtungen 14a, 14b, 14c zugeordneten Monitore 16a, 16b, 16c, die vorzugsweise als Touchpad ausgestaltet sind, und/oder über die mobilen elektronischen Kommunikationsgeräte 18a, 18b, 18c Nachrichten als Teil eines Informationspakets 25 empfangen und Informationspakete 22 absetzen, wobei die Kommunikation mit dem zentralen Kommunikationsserver 30 über die ersten Kommunikationseinrichtungen 14a, 14b, 14c erfolgt und die Weiterleitung von Nachrichten 25 oder aber das Absenden von Nachrichten von einem mobilen elektronischen Kommunikationsgerät 18a, 18b, 18c aus stets zunächst über die ersten Kommunikationseinrichtungen 14a, 14b, 14c erfolgt.

Mit dem erfindungsgemäßen Kommunikationssystem 10 können in beliebiger Weise Sprach- oder Textnachrichten ausgetauscht und in die zweite Sprache des gewünschten Empfängers oder die zweiten Sprachen der gewünschten Empfänger umgewandelt von diesem empfangen werden.

Um das Kommunikationssystem auch bei Personalwechsel immer in einem richtig konfigurierten Zustand zu halten, weisen die ersten Kommunikationseinrichtung 14a, 14b, 14c jeweils Reset-Einrichtungen 15a, 15b, 15c auf, mit denen sich die ersten Kommunikationseinrichtungen 14a, 14b, 14c in einem vordefinierten Ausgangszustand zurückversetzen lassen. Die Reset-Signale werden dabei nicht nur zum Zurücksetzen der ersten Kommunikationseinrichtungen 14a, 14b, 14c an den Reinigungswägen 12a, 12b, 12c benötigt, sondern auch an den zentralen Kommunikationsserver 30 übersandt, der daraufhin in der Zuordnungsliste 34 ebenfalls für die betreffende erste Kommunikationseinrichtung, von der ein Reset-Signal ausgesandt wurde, die hinterlegte Sprache entfernt und durch eine vordefinierte Sprache als Ausgangszustand ersetzt. Wenn eine neue Reinigungskraft mit einem entsprechenden Reinigungswagen arbeitet, kann für diese zunächst die erste Kommunikationseinrichtung auf die gewünschte Sprache konfiguriert werden. Dazu wird im Rahmen der Konfiguration ebenfalls die entsprechende Information von der jeweiligen ersten Kommunikationseinrichtung an den zentralen Kommunikationsserver 30 übersandt und daraufhin die im Rahmen der Konfiguration eingestellte, gewünschte Sprache in der Zuordnungsliste 34 hinterlegt. Auf diese Weise kann auch bei häufigen Personalwechseln stets die gewünschte Kommunikation in der richtigen Sprache sichergestellt werden.

Die den ersten Kommunikationseinrichtungen 14a, 14b, 14c zugeordneten Monitore 16a, 16b, 16c oder aber auch die mobilen elektronischen Kommunikationsgeräte 18a, 18b, 18c können zusätzlich dazu verwendet werden, um sprachneutrale Piktogramme zu empfangen, die häufig wiederkehrende, standardisierte Reinigungsleistungen symbolisieren oder aber auch gleichzeitig als Link zu Lehrvideos dienen können, die durchzuführende Tätigkeiten erläutern, die sich im Rahmen einer Sprach- oder Textnachricht nur schwer erläutern lassen. Auf diese Weise ist es möglich, die in einem zu reinigenden Objekt tätigen Reinigungskräfte optimal mit Informationen in Bezug auf die Reinigungsleistungen zu informieren und Informationsverluste oder Missverständnisse aufgrund von Sprachbarrieren möglichst gering zu halten.

## Patentansprüche

1. Kommunikationssystem für Reinigungsaufgaben, mit
- einer Vielzahl von Reinigungswägen (12a, 12b, 12c) mit jeweils einer ersten Kommunikationseinrichtung (14a, 14b, 14c), die einen ersten Sender und ersten Empfänger umfasst;
und
- einer zweiten Kommunikationseinrichtung (20), die einen zweiten Sender und zweiten Empfänger umfasst;
**dadurch gekennzeichnet, dass** das Kommunikationssystem umfasst:
- einen zentralen Kommunikationsserver (30); wobei der zentrale Kommunikationsserver (30) ausgestaltet ist, um
- kabellos von der ersten Kommunikationseinrichtung (14a, 14b, 14c) oder der zweiten Kommunikationseinrichtung (20) ein Informationspaket (22) zu empfangen, umfassend elektronische Nachrichten sowie den oder die gewünschten Empfänger aus der Gruppe bestehend aus den ersten Empfängern und dem zweiten Empfänger;
- Zugriff auf eine Sprachübersetzungssoftware (32) zu besitzen,
- Zugriff auf eine Zuordnungsliste (34) zu besitzen, die der zweiten Kommunikationseinrichtung (20) sowie der Vielzahl an ersten Kommunikationseinrichtungen (14a, 14b, 14c) jeweils eine erste Sprache aus einer vorgegebenen Auswahl an Sprachen zuordnet,
- wobei von dem zweiten Sender oder einem der Vielzahl an ersten Sendern vom zentralen Kommunikationsserver empfangene Nachrichten selbsttätig in die hinterlegte Sprache des gewünschten Empfängers oder jedes gewünschten Empfängers übersetzbar und an den gewünschten Empfänger oder jeden gewünschten Empfänger übertragbar ist.

2. Kommunikationssystem nach Anspruch 1,
**dadurch gekennzeichnet, dass**
die erste Kommunikationseinrichtung (14a, 14b, 14c) einen Monitor (16a, 16b, 16c) am Reinigungswagen (12a, 12b, 12c) umfasst, der vorzugsweise als Touchpad ausgestaltet ist.

3. Kommunikationssystem nach Anspruch 1 oder 2,
**dadurch gekennzeichnet, dass**
jeder Reinigungswagen (12a, 12b, 12c) weiterhin ein mobiles elektronisches Kommunikationsgerät (18a, 18b, 18c) umfasst, das ausgestaltet ist, um bei Annäherung an den zugehörigen Reinigungswagen (12a, 12b, 12c) über Nahfeldkommunikation kabellos Informationen mit der ersten Kommunikationseinrichtung (14a, 14b, 14c)auszutauschen.

4. Kommunikationssystem nach Anspruch 3,
**dadurch gekennzeichnet, dass**
das mobile elektronische Kommunikationsgerät (18a, 18b, 18c) einen integrierten Lautsprecher (24a, 24b, 24c) oder ein Interface (26a, 26b, 26c) zu einem externen Lautsprecher, sowie ein Mikrofon (27a, 27b, 27c) oder ein weiteres Interface (28a, 28b, 28c) zu einem externen Mikrofon aufweist.

5. Kommunikationssystem nach einem der vorhergehenden Ansprüche,
**dadurch gekennzeichnet, dass**
der zentrale Kommunikationsserver (30) weiterhin ausgestaltet ist, um Zugriff zu besitzen auf eine Spracherkennungssoftware (36), die geeignet ist, Sprachnachrichten in einer Sprache aus der vorgegebenen Auswahl an Sprachen in Textnachrichten in dieser Sprache umzuwandeln.

6. Kommunikationssystem nach einem der vorhergehenden Ansprüche,
**dadurch gekennzeichnet, dass**
der zentrale Kommunikationsserver (30) weiterhin ausgestaltet ist, um im Datenaustausch zu stehen mit einer Spracherzeugungssoftware (38), die geeignet ist, um Textnachrichten, die in einer Sprache aus der vorgegebenen Auswahl an Sprachen abgefasst sind, in Sprachnachrichten in dieser Sprache umzuwandeln.

7. Kommunikationssystem nach einem der vorhergehenden Ansprüche,
**dadurch gekennzeichnet, dass**
jede erste Kommunikationseinrichtung (14a, 14b, 14c) eine Reset-Einrichtung (15a, 15b, 15c) aufweist, um die erste Kommunikationseinrichtung (14a, 14b, 14c) in einen vordefinierten Ausgangszustand zurückzusetzen.

8. Kommunikationssystem nach einem der vorhergehenden Ansprüche,
**dadurch gekennzeichnet, dass**
der zentrale Kommunikationsserver (30) über eine Internetverbindung mit der zweiten Kommunikationseinrichtung (20) und der Vielzahl von ersten Kommunikationseinrichtungen (14a, 14b, 14c) in Informationsaustausch steht.

9. Verfahren zum Austausch von Informationen zwischen einer Vielzahl an Reinigungswägen (12a, 12b, 12c) mit jeweils einer ersten Kommunikationseinrichtung (14a, 14b, 14c) mit einem ersten Sender und ersten Empfänger, und einer zweiten Kommunikationseinrichtung (20) mit einem zweiten Sender und zweiten Empfänger, umfassend die Schritte:
(a) kabelloses Übertragen eines Informationspakets an einen zentralen Kommunikationsserver (30), wobei das Informationspaket eine beliebige, von einem Benutzer in eine der ersten Kommunikationseinrichtungen (14a, 14b 14c) oder die zweite Kommunikationseinrichtung (20) eingegebene elektronische Nachricht in einer ersten Sprache, den oder die gewünschten Empfänger sowie automatisch generierte Informationen über den Sender umfasst;
(b) Zugriff des zentralen Kommunikationsservers (30) auf eine Sprachübersetzungssoftware (32) um die Nachricht in eine zweite Sprache zu transferieren, die der in einer Zuordnungsdatei (34) hinterlegten Sprache des gewünschten Empfängers oder den jeweiligen in der Zuordnungsdatei (34) hinterlegten Sprachen der gewünschten Empfänger entspricht; und
(c) kabelloses Übersenden durch den zentralen Kommunikationsserver (30) der in die zweite Sprache übersetzten Nachricht an den oder die gewünschten Empfänger.

10. Verfahren nach Anspruch 9, weiter umfassend den Schritt:
(b2) Übertragen einer Textnachricht in eine Sprachnachricht mit Hilfe eines softwaregestützten Sprachgenerators (38).

11. Verfahren nach Anspruch 9 oder Anspruch 10, weiter umfassend den Schritt:
(b3) Übertragen einer Sprachnachricht in einer Textnachricht mit Hilfe eines softwaregestützten Spracherkennungssystems (36).

12. Verfahren nach einem der Ansprüche 9 bis 11, weiter umfassend die zusätzliche Ausgabe eines oder mehrerer Piktogramme an einer ersten Kommunikationseinrichtung (14a, 14b, 14c) als Empfänger einer Nachricht.

## Claims

1. Communication system for cleaning tasks, with
- a plurality of cleaning trolleys (12a, 12b, 12c), each with a first communication unit (14a, 14b, 14c) comprising a first transmitter and first receiver; and
- a second communication unit (20) comprising a second transmitter and second receiver;
**characterised in that** the communication system comprises:
- a central communication server (30); wherein the central communication server (30) is designed
- to receive wirelessly from the first communication unit (14a, 14b, 14c) or the second communication unit (20) an information packet (22) comprising electronic messages as well as the desired recipient(s) from the group consisting of the first receivers and the second receiver;
- to have access to language translation software (32),
- to have access to an assignment list (34) which assigns a first language from a specified selection of languages to the second communication unit (20) and to the plurality of first communication units (14a, 14b, 14c),
- wherein messages received by the second transmitter or one of the plurality of first transmitters from the central communication server can be automatically translated into the stored language of the desired recipient or each desired recipient and transmitted to the desired recipient or each desired recipient.

2. Communication system according to claim 1, **characterised in that** the first communication unit (14a, 14b, 14c) comprises a monitor (16a, 16b, 16c) on the cleaning trolley (12a, 12b, 12c) which is preferably designed as a touchpad.

3. Communication system according to claim 1 or 2, **characterised in that** each cleaning trolley (12a, 12b, 12c) further comprises a mobile electronic communication device (18a, 18b, 18c) which is designed to exchange information wirelessly with the first communication unit (14a, 14b, 14c) via near-field communication on approaching the associated cleaning trolley (12a, 12b, 12c).

4. Communication system according to claim 3, **characterised in that** the mobile electronic communication device (18a, 18b, 18c) has an integrated loudspeaker (24a, 24b, 24c) or an interface (26a, 26b, 26c) to an external loudspeaker as well as a microphone (27a, 27b, 27c) or a further interface (28a, 28b, 28c) to an external microphone.

5. Communication system according to one of the preceding claims, **characterised in that** the central communication server (30) is further designed to have access to speech recognition software (36) which is capable of converting voice messages in a language from the specified selection of languages into text messages **in that** language.

6. Communication system according to one of the preceding claims, **characterised in that** the central communication server (30) is further designed to exchange data with speech generation software (38) which is capable of converting text messages written in a language from the specified selection of languages into voice messages **in that** language.

7. Communication system according to one of the preceding claims, **characterised in that** each first communication unit (14a, 14b, 14c) has a reset device (15a, 15b, 15c) to reset the first communication unit (14a, 14b, 14c) to a predefined initial state.

8. Communication system according to one of the preceding claims, **characterised in that** the central communication server (30) exchanges information with the second communication unit (20) and the plurality of first communication units (14a, 14b, 14c) via an internet connection.

9. Method for exchanging information between a plurality of cleaning trolleys (12a, 12b, 12c), each having a first communication unit (14a, 14b, 14c) with a first transmitter and first receiver, and a second communication unit (20) with a second transmitter and second receiver, comprising the steps:
(a) wirelessly transmitting an information packet to a central communication server (30), wherein the information packet comprises any desired electronic message in a first language entered by a user into one of the first communication units (14a, 14b, 14c) or the second communication unit (20), the desired recipient(s) and automatically generated information about the sender;
(b) the central communication server (30) accessing language translation software (32) in order to translate the message into a second language corresponding to the language of the desired recipient stored in an assignment file (34) or into the respective languages of the desired recipients stored in the assignment file (34); and
(c) the central communication server (30) wirelessly transmitting the message translated into the second language to the desired recipient(s).

10. Method according to claim 9, further comprising the step:
(b2) converting a text message into a voice message using a software-assisted speech generator (38).

11. Method according to claim 9 or claim 10, further comprising the step:
(b3) converting a voice message into a text message using a software-assisted speech recognition system (36).

12. Method according to one of the claims 9 to 11, further comprising the additional outputting of one or more pictograms to a first communication unit (14a, 14b, 14c) as the recipient of a message.

## Revendications

1. Système de communication pour des tâches de nettoyage, avec
- une pluralité de chariots de nettoyage (12a, 12b, 12c) avec chacun un premier dispositif de communication (14a, 14b, 14c), qui comprend un premier expéditeur et un premier destinataire ; et
- un deuxième dispositif de communication (20), qui comprend un deuxième expéditeur et un deuxième destinataire ;
**caractérisé en ce que** le système de communication comprend :
- un serveur de communication central (30); dans lequel le serveur de communication central (30) est configuré pour
- recevoir sans fil un paquet d'informations (22), comprenant des messages électroniques ainsi que le ou les destinataires souhaités du groupe constitué des premiers destinataires et du deuxième destinataire, en provenance du premier dispositif de communication (14a, 14b, 14c) ou du deuxième dispositif de communication (20) ;
- avoir accès à un logiciel de traduction linguistique (32),
- avoir accès à une liste d'affectation (34) qui attribue respectivement au deuxième dispositif de communication (20) ainsi qu'à la pluralité de premiers dispositifs de communication (14a, 14b, 14c) une première langue parmi une sélection prédéfinie de langues,
- dans lequel des messages reçus par le serveur de communication central du deuxième expéditeur ou de l'un de la pluralité de premiers expéditeurs peuvent être traduits automatiquement dans la langue enregistrée du destinataire souhaité ou de chaque destinataire souhaité et peuvent être transmis au destinataire souhaité ou à chaque destinataire souhaité.

2. Système de communication selon la revendication 1,
**caractérisé en ce que**
le premier dispositif de communication (14a, 14b, 14c) comprend un moniteur (16a, 16b, 16c) sur le chariot de nettoyage (12a, 12b, 12c), qui est de préférence configuré comme un pavé tactile.

3. Système de communication selon la revendication 1 ou la revendication 2,
**caractérisé en ce que**
chaque chariot de nettoyage (12a, 12b, 12c) comprend par ailleurs un appareil de communication électronique mobile (18a, 18b, 18c) qui est configuré pour, à l'approche du chariot de nettoyage (12a, 12b, 12c) associé, échanger sans fil des informations avec le premier dispositif de communication (14a, 14b, 14c) par communication en champ proche.

4. Système de communication selon la revendication 3,
**caractérisé en ce que**
l'appareil de communication électronique mobile (18a, 18b, 18c) présente un haut-parleur intégré (24a, 24b, 24c) ou une interface (26a, 26b, 26c) avec un haut-parleur externe, ainsi qu'un microphone (27a, 27b, 27c) ou une autre interface (28a, 28b, 28c) avec un microphone externe.

5. Système de communication selon l'une quelconque des revendications précédentes,
**caractérisé en ce que**
le serveur de communication central (30) est configuré par ailleurs pour avoir accès à un logiciel de reconnaissance vocale (36) qui est adapté pour convertir des messages vocaux dans une langue parmi la sélection prédéfinie de langues en messages texte dans ladite langue.

6. Système de communication selon l'une quelconque des revendications précédentes,
**caractérisé en ce que**
le serveur de communication central (30) est configuré par ailleurs pour échanger des données avec un logiciel de génération de langue (38) qui est adapté pour convertir des messages texte rédigés dans une langue parmi la sélection prédéfinie de langues en messages vocaux dans ladite langue.

7. Système de communication selon l'une quelconque des revendications précédentes,
**caractérisé en ce que**
chaque premier dispositif de communication (14a, 14b, 14c) présente un dispositif de réinitialisation (15a, 15b, 15c) pour remettre le premier dispositif de communication (14a, 14b, 14c) dans un état de départ prédéfini.

8. Système de communication selon l'une quelconque des revendications précédentes,
**caractérisé en ce que**
le serveur de communication central (30) est en échange d'informations avec le deuxième dispositif de communication (20) et la pluralité de premiers dispositifs de communication (14a, 14b, 14c) par l'intermédiaire d'une connexion Internet.

9. Procédé d'échange d'informations entre une pluralité de chariots de nettoyage (12a, 12b, 12c) avec chacun un premier dispositif de communication (14a, 14b, 14c) avec un premier expéditeur et un premier destinataire, et un deuxième dispositif de communication (20) avec un deuxième expéditeur et un deuxième destinataire, comprenant les étapes :
(a) de transmission sans fil d'un paquet d'informations à un serveur de communication central (30), dans lequel le paquet d'informations comprend tout message électronique saisi par un utilisateur dans l'un des premiers dispositifs de communication (14a, 14b, 14c) ou le deuxième dispositif de communication (20) dans une première langue, le ou les destinataires souhaités ainsi que des informations générées automatiquement sur l'expéditeur ;
(b) l'accès du serveur de communication central (30) à un logiciel de traduction linguistique (32) pour transférer le message dans une deuxième langue qui correspond à la langue du destinataire souhaité enregistrée dans un fichier d'affectation (34) ou aux langues respectives des destinataires souhaités enregistrées dans le fichier d'affectation (34) ; et
(c) l'envoi sans fil par le serveur de communication central (30) du message traduit dans la deuxième langue au(x) destinataire(s) souhaité(s).

10. Procédé selon la revendication 9, comprenant par ailleurs l'étape :
(b2) de transmission d'un message texte dans un message vocal à l'aide d'un générateur vocal (38) assisté par logiciel.

11. Procédé selon la revendication 9 ou la revendication 10, comprenant par ailleurs l'étape :
(b3) de transmission d'un message vocal dans un message texte à l'aide d'un système de reconnaissance vocale (36) assisté par logiciel.

12. Procédé selon l'une quelconque des revendications 9 à 11, comprenant en outre la sortie supplémentaire d'un ou plusieurs pictogrammes sur un premier dispositif de communication (14a, 14b, 14c) en tant que destinataire d'un message.
